# EUROPEAN PATENT SPECIFICATION

(11) **EP 4 194 754 B1**
(45) Date of publication and mention of the grant of the patent: **01.04.2026**
(21) Application number: 22207482.5
(22) Date of filing: 15.11.2022
(51) Int. Cl.: F23K 5/00, F16K 15/02

(54) **GAS VALVE AND GAS BURNER SYSTEM**
GASVENTIL UND GASBRENNERSYSTEM
SOUPAPE À GAZ ET SYSTÈME DE BRÛLEUR À GAZ

(30) Priority: 02.12.2021 TW 110144956
(43) Date of publication of application: 14.06.2023
(73) Proprietor: Grand Mate Co., Ltd., Taichung City 401 (TW)
(72) Inventor: HUANG, Chung-Chin, 401 Taichung City (TW); HUANG, Chin-Ying, 401 Taichung City (TW); HUANG, Hsin-Ming, 401 Taichung City (TW); HUANG, Hsing-Hsiung, 401 Taichung City (TW); YEH, Yen-Jen, 412 Taichung City (TW)
(74) Representative: Viering, Jentschura & Partner mbB Patent- und Rechtsanwälte

(56) References cited:
- WO-A1-2016/131465
- WO-A1-2021/016125
- TW-U- M 246 542
- US-A1- 2015 114 313
- US-A1- 2019 383 407

## Description

### BACKGROUND OF THE INVENTION

### Technical Field

The present invention relates generally to a gas valve, and more particularly to a gas valve and/or a gas burner system having a check valve body.

### Description of Related Art

The gas burner system includes a plurality of gas appliances, wherein the gas appliances are connected to the same gas pipe and could be turned on individually to combust gas. Take a hot water supply system as an example, the conventional hot water supply system includes a plurality of water heaters as the gas appliance. Each of the water heaters has an inlet section, an outlet section, a gas pipes. The inlet sections of the water heaters are connected to the same water supply tube. The outlet sections of the water heaters are connected to an outlet tube to supply hot water to a plurality of taps. The gas pipes of the water heaters are connected to the same gas pipe in parallel. The control unit could control each of the water heaters to be turned on or off, so that the hot water supply system could provide enough amount of hot water for users. In other words, the control unit could control the on and off of the water heater according to the demand for hot water.

However, the more water heaters are connected, the less purity of gas received by the water heater approaching a distal end of the gas pipe, which leads to a long ignition time. For example, when the water heater approaching the distal end is turned on, but the water heater approaching the gas source is not activated, the gas flow in the gas pipe could draw the air in the water heater approaching the gas source into the gas pipe, leading the purity of the gas in the gas pipe is reduced. Since the gas flowing into the water heater approaching the distal end of the gas pipe is mixed with air, in the water heater approaching the distal end of the gas pipe, the ignition time is longer and the combustion efficiency is poor.

Therefore, the conventional gas burner system has room for improvement.

WO 2016/131465 A1 discloses a closing valve with a valve body which can be moved from a closed position against the restoring force of a restoring element into an open position when a specified fluid pressure is exceeded; TW M 246 542 U discloses a gas backflow blocker that can smoothly block the gas backflow, avoid gas explosions, and ensure the safety of use; US 2019/0383407 A1 discloses an insert check valve that can be constructed such that it is easy to assemble and disassemble, as well as allowing minimal parts, reduced weight, low flow obstruction, and a high flow coefficient; WO 2021/016125 A1 discloses a gas valve including features designed to prevent the buildup of negative pressure in a fuel line connected to the gas valve that could cause internal valve members to open, drawing fuel from the gas valve; US 2015/0114313 A1 discloses a hot water supply system, which makes the hot water supply system operational again even when the coordinating mechanism for water heaters loses efficacy.

### BRIEF SUMMARY OF THE INVENTION

In view of the above, the primary objective of the present invention is to provide a gas burner system that could prevent gas/air from flowing through the gas appliance back to the gas pipe connected to the gas source.

According to the present invention, a gas valve according to claim 1 is provided and a gas burner system according to claim 6 is provided. Preferred embodiments are defined in the dependent claims.

The present invention provides a gas burner system connected to a gas source. The gas burner system includes a plurality of gas appliances, a plurality of gas pipes. Each of the gas appliances includes a burner for burning gas, and the gas appliances include a first gas appliance and a second gas appliance. The gas pipes include a main pipe, a first gas pipe, and a second gas pipe. The main pipe is connected to the gas source. An end of the first gas pipe is connected to the main pipe, and another end of the first gas pipe is connected to the first gas appliance. An end of the second gas pipe is connected to the main pipe, and another end of the second gas pipe is connected to the second gas appliance. The first gas pipe is connected to the main pipe at a site that is closer to the gas source than a connection site between the second gas pipe and the main pipe. The first gas appliance includes a gas valve, wherein the gas valve communicates with the burner of the first water heater and includes an inlet channel. The end of the first gas pipe is connected to the main pipe, the another end of the first gas pipe is connected to the inlet channel of the first gas appliance. The check valve body is disposed in the inlet channel of the gas valve, wherein the check valve body includes an elastic member and a sealing member; the elastic member provides a supporting force to the sealing member to block the inlet channel, so that gas in the gas valve is prevented from flowing back to the first gas pipe. When gas flows in the first gas pipe toward the gas valve, the gas flow provides a force against to the supporting force to move the sealing member, thereby allowing the gas to flow through the check valve body.

The present invention provides a gas valve for a gas appliance, wherein the gas valve communicates with a gas source via a gas pipe. The gas valve includes an inlet channel and a check valve body. The inlet channel communicates with the gas pipe. The check valve body is disposed in the inlet channel of the gas valve and includes an elastic member and a sealing member, wherein the elastic member provides a supporting force to the sealing member to block the inlet channel. When gas flows toward the gas valve, the gas flow provides a force against the supporting force to move the sealing member, thereby allowing the gas to flow through the check valve body.

With such design, the air/gas in the gas valve could not flow back to the first gas pipe or the gas pipe through the check valve body. Therefore, when the gas flowing to the second gas appliance, the gas is not mixed with the air coming from the first gas appliance, thereby reducing the ignition time of the second gas appliance and improving the combustion efficiency of the second gas appliance.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a schematic view of the hot water supply system of an embodiment according to the present invention;
FIG. 2 is a schematic view of the water heater of the embodiment according to the present invention;
FIG. 3A is a perspective view of the gas valve of the embodiment according to the present invention;
FIG. 3B is a perspective view of the gas valve of an embodiment according to the present invention seen from another perspective;
FIG. 4 is a schematic view of the gas valve of the embodiment according to the present invention;
FIG. 5 is an enlarged partial view of a marked region in FIG. 4;
FIG. 6 is similar to FIG. 5, showing the check valve body is opened for the gas to pass through;
FIG. 7 is a schematic view of the gas valve of the embodiment according to the present invention, showing the first isolating membrane is moved downward to allow the first part of the inlet chamber to communicate with the outlet tube for the pilot burner;
FIG. 8 is a schematic view of the gas valve of the embodiment according to the present invention, showing the second isolating membrane is moved upward to allow the second part of the main gas chameber to communicate with the outlet tube for the main burner;
FIG. 9 is an exploded view of the component of the gas valve of the embodiment according to the present invention;
FIG. 10 is a perspective view of the check valve body of the gas valve of the embodiment according to the present invention; and,
FIG. 11 is a schematic view of the valve of the embodiment according to the present invention, showing the check valve structure is mounted.

### DETAILED DESCRIPTION OF THE INVENTION

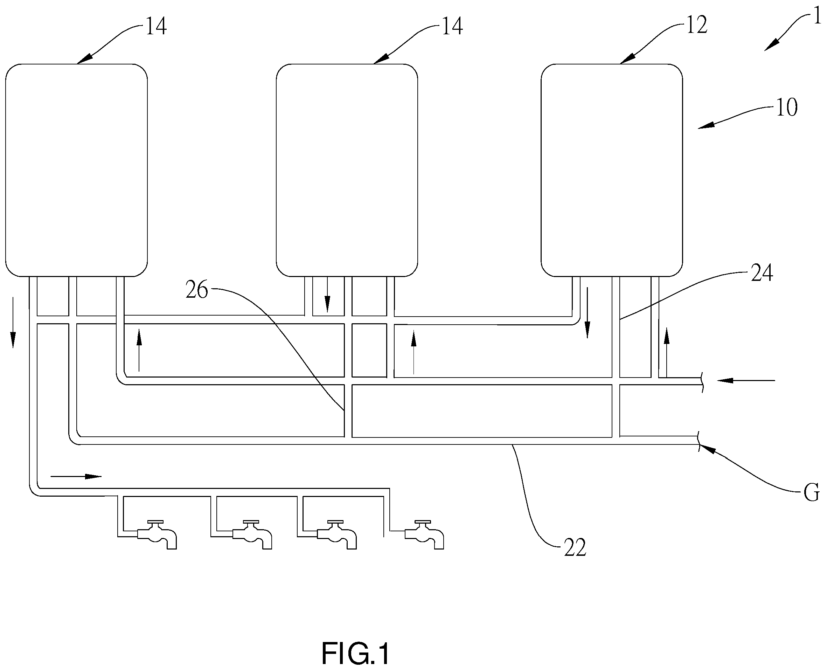

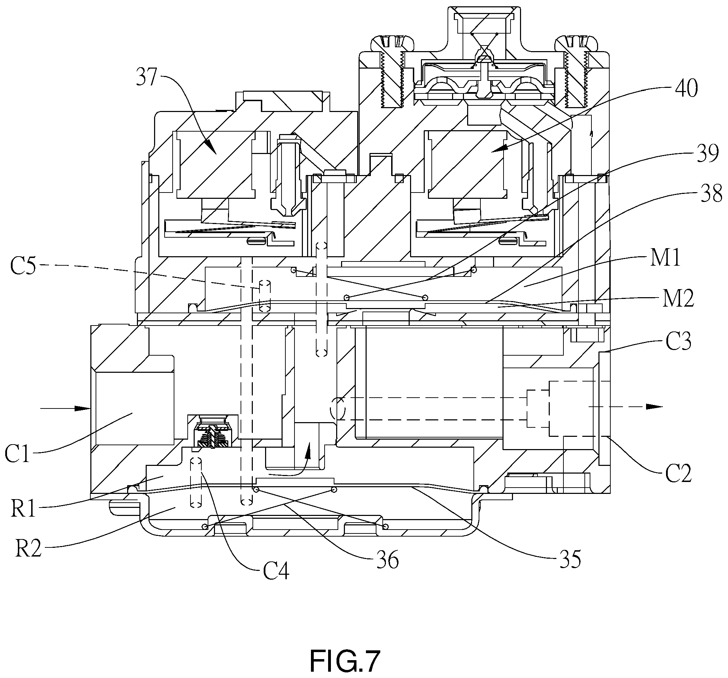

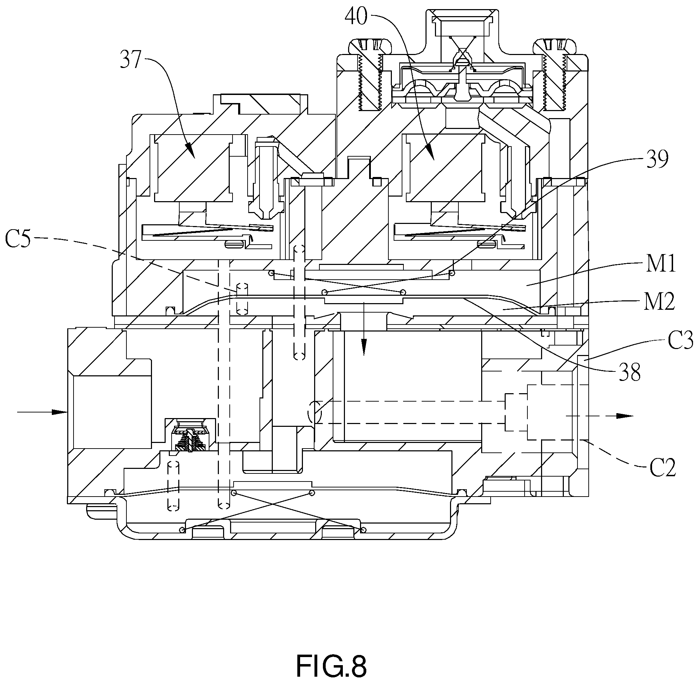

As illustrated in FIG. 1 to FIG. 8, a gas burner system of an embodiment according to the present invention is a hot water supply system 1 as an example. The hot water supply system 1 is connected to a gas source G that is natural gas and is supplied by a gas company.

As illustrated in FIG. 1, the hot water supply system 1 includes a gas appliance and a plurality of gas pipes, wherein the gas appliance includes a plurality of water heaters 10 as an example. The water heaters 10 includes a first water heater 12 as a first gas appliance and at least one second water heater 14 as at least one second gas appliance. Each of the gas appliances includes a burner for burning gas. The gas pipes include a main pipe 22 and a plurality of branching pipes that is connected to the main pipe 22, wherein an end of the main pipe 22 is connected to the gas source G, and the other end of the main pipe 22 (namely an end opposite to the end connected to the gas source G) is defined as a distal end. The branching pipes include at least one first gas pipe 24 and at least one second gas pipe 26. An end of the first gas pipe 24 communicates with the main pipe 22, the other end of the first gas pipe 24 communicates with the first water heater 12. An end of the second gas pipe 26 communicates with the main pipe 22, the other end of the second gas pipe 26 communicates with the second water heater 14. The first gas pipe 24 is connected to the main pipe 22 at a site that is closer to the gas source G than any connection site between the second gas pipe 26 and the main pipe 22. Besides, as illustrated in FIG. 1, as long as the connection site of any branching pipe is relative to the gas source G farther than the site where the first gas pipe 24 is connected to the main pipe 22, the water heater 10 connected to said branching pipe is defined as the second water heater 14. In the embodiment, the at least one second water heater 14 includes a plurality of second water heaters.

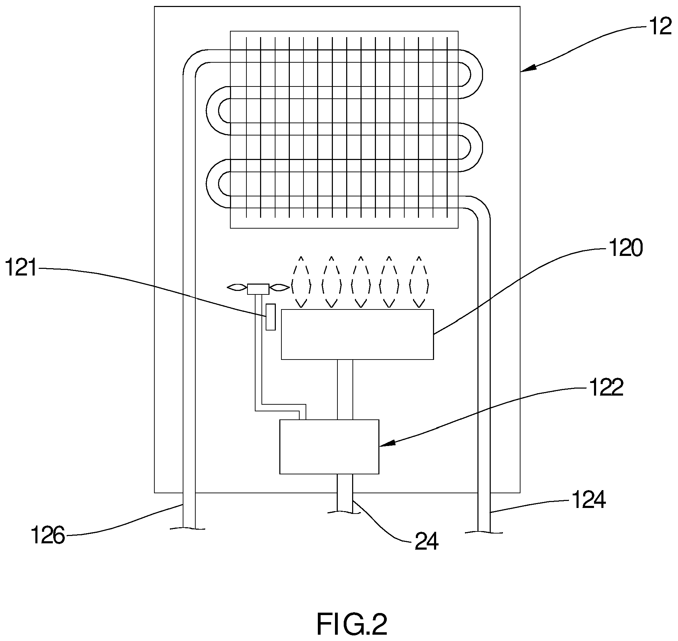

As illustrated in FIG. 2, the first water heater 12 includes a gas valve 122, a burner 120, and an ignitor 121. In the current embodiment, an end of the first gas pipe 24 communicates with the first gas pipe 24, the other end of the first gas pipe 24 communicates with the gas valve 122. The burner 120 includes a main burner and a pilot burner, wherein the burner 120 is adapted to burn the gas outputted through the gas valve 122 to generate flame, thereby heating water that is inputted through an inlet section 124 in the first water heater 12. After the water is heated in the first water heater 12, the water is outputted through an outlet section 126.

A check valve body 30 is disposed in the gas valve 122 and is adapted to allow gas flowing into the gas valve 122 through the first gas pipe 24 and to prohibit gas in the gas valve 122 from flowing back to the first gas pipe 24. Therefore, when the at least one second water heater 14 that approaches the distal end of the main pipe 22 is operated and the first water heater 12 that approaches the gas source G is not operated, gas/air in the gas valve 122 of the first water heater 12 is unable to flow back the first gas pipe 24 through the check valve body 30. With such design, even though gas keeps flowing toward the second water heater 14, the gas flowing into the second water heater 14 does not mix with gas/air in the first water heater 12, thereby reducing an ignition time or improving the combustion efficiency of the second water heater 14.

In the current embodiment, the check valve body 30 is disposed in the gas valve 122 of the first water heater 12. However, the check valve body 30 is not limited to being disposed in the first water heater 12. The gas valve of each of the water heaters could be disposed with the check valve body 30. For example, as illustrated in FIG. 1, the second water heater 14 which is located between the first water heater 12 and the other second water heater 14 could be disposed with the check valve body 30. Alternatively, each of the second water heaters 14 could be disposed with a gas valve as that of the first water heater 12.

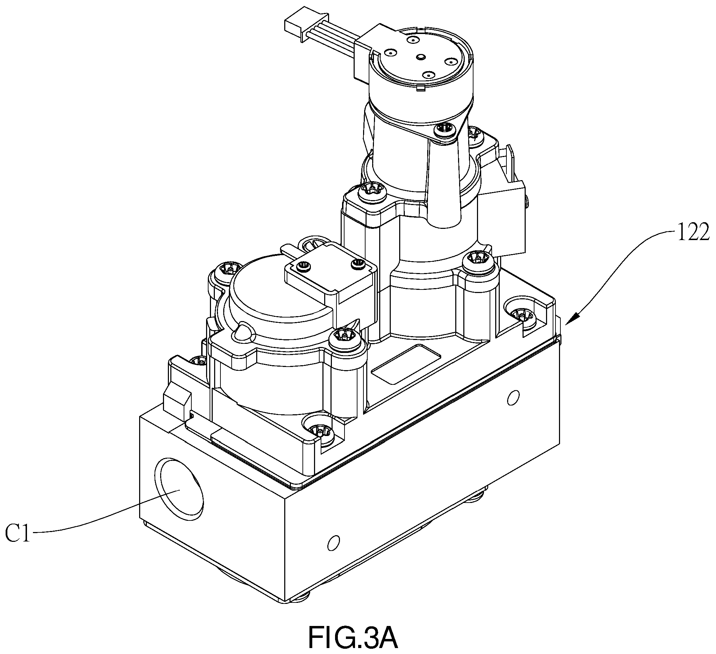

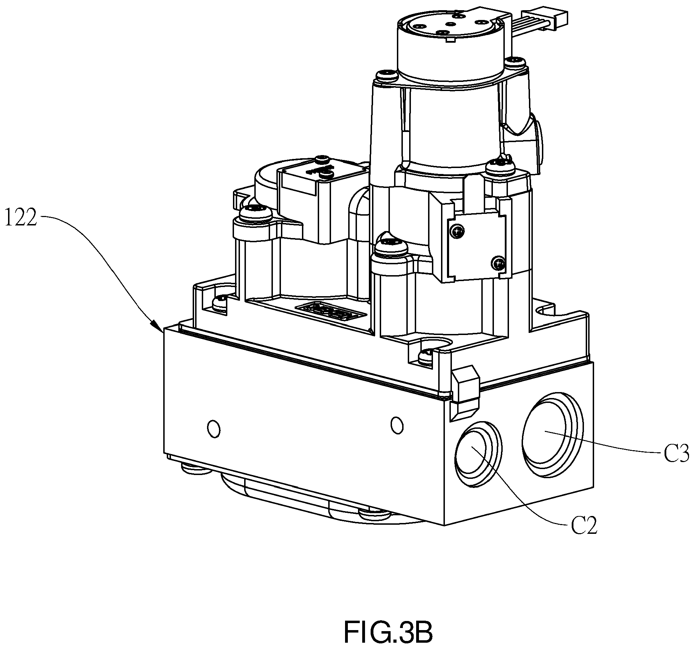

As illustrated in FIG. 3 to FIG. 6, the gas valve 122 includes an inlet channel C1 communicating with the first gas pipe 24. The check valve body 30 is disposed in the inlet channel C1 and includes an elastic member 31 and a sealing member 32. The elastic member 31 provides a supporting force to urge the sealing member 32 to block the inlet channel C1. When the elastic member 31 is pushed by a force greater than the supporting force, the sealing member 32 is moved to allow gas in the inlet channel C1 to flow through the check valve body 30.

More specifically, the check valve body 30 includes a seat 33 and a guided rod 34. The seat 33 is disposed in the inlet channel C1 and has a protruding column 331, wherein the protruding column 331 has a perforation 332. An end of the guided rod 34 is movably inserted into the perforation 332, and the other end of the guided rod 34 is connected to the sealing member 32. The sealing member 32 has a hole 321. The end of the guided rod 34 connected to the sealing member 32 has a head 341 and a restricting portion 342. The guided rod 34 passes through the hole 321 of the sealing member 32, and the sealing member 32 is located between the head 341 and the restricting portion 342 of the guided rod 34. A diameter of the head 341 and a diameter of the restricting portion 342 are greater than a diameter of the hole 321 of the sealing member 32. The diameter of the restricting portion 342 is greater than a diameter of the perforation 332 of the seat 33.

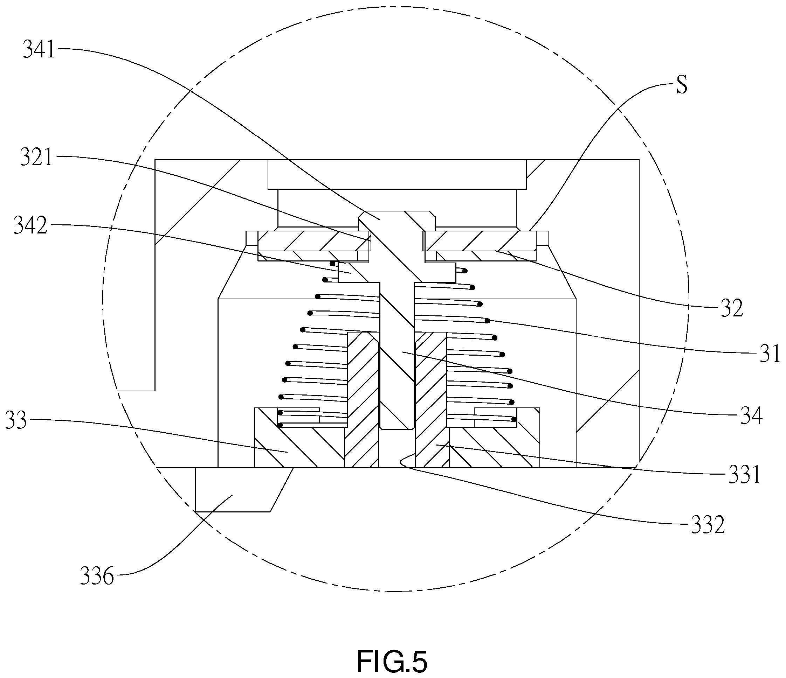

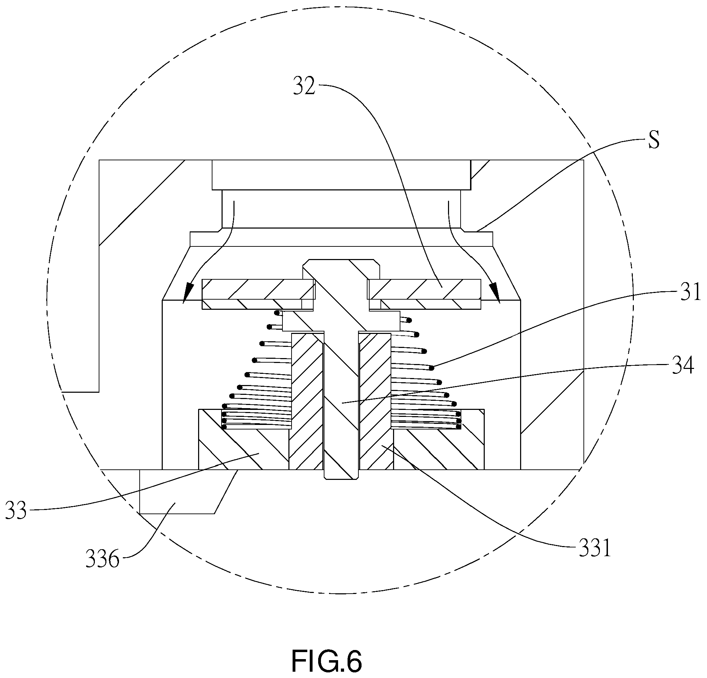

The inlet channel C1 has a shoulder S. The elastic member 31 fits around the guided rod 34 and the protruding column 331. An end of the elastic member 31 urges against the sealing member 32, the other end of the elastic member 31 urges against the seat 33. In the current embodiment, the elastic member 31 is a conical compression spring, wherein a diameter of the conical compression spring is gradually increased from the end of the elastic member 31 urging against the sealing member 32 to the end of the elastic member 31 urging against the seat 33. A side of the sealing member 32 abuts against the shoulder S, and an opposite side of the sealing member 32 is urged against by the elastic member 31, thereby blocking the inlet channel C1, as shown in FIG. 5. When the elastic member 31 is pushed by the force greater than the supporting force, the sealing member 32 disengaging from the shoulder S, thereby allowing gas in the inlet channel C1 could flow through the check valve body 30, as shown in FIG. 6.

When gas from the gas source G flows into the first gas pipe 24, the gas flow pushes the elastic member 31 via the sealing member 32. When a force exerted by the gas flow is greater than the supporting force, the sealing member 32 is moved to compress the elastic member 31, thereby allowing the gas in the inlet channel C1 could flow through the check valve body 30. On the contrary, when the force exerted by the gas flow is smaller than the supporting force exerted to the sealing member 32 by the elastic member 31, the elastic member 31 urges the sealing member 32 to return to abut against the shoulder S of the inlet channel C1, thereby preventing gas in the gas valve 122 from flowing back to the first gas pipe 24.

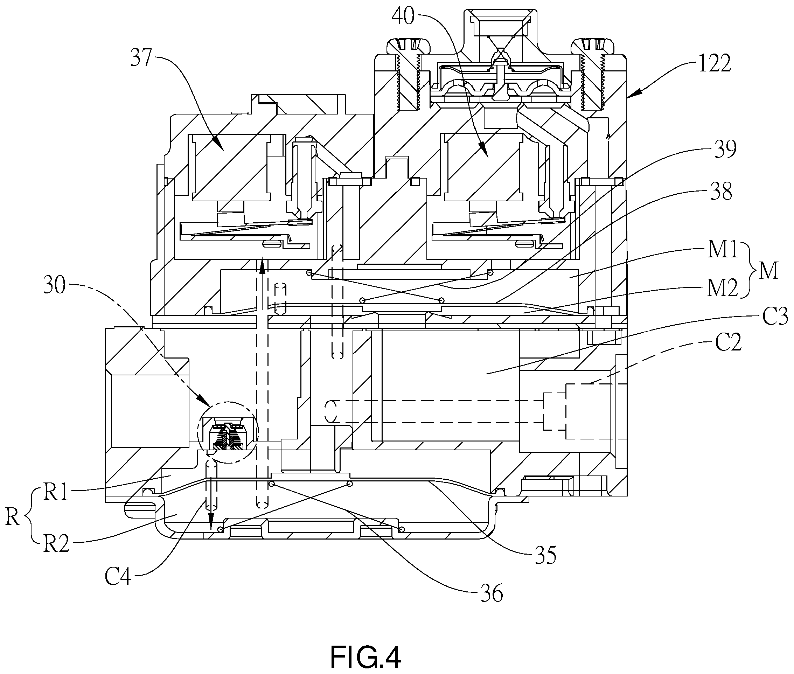

As illustrated in FIG. 4 and FIG. 7 to FIG. 8, the gas valve 122 includes an inlet chamber R, a first isolating membrane 35, a first elastic member 36, a first electromagnetic valve 37, a first outlet channel C2, a main gas chamber M, a second isolating membrane 38, a second elastic member 39, a second electromagnetic valve 40, and a second outlet channel C3, wherein each of the first elastic member 36 and the second elastic member 39 is a spring. The first electromagnetic valve 37 is adapted to control a gas flow to the pilot burner, and the first outlet channel C2 is adapted to supply gas to the pilot burner. The second electromagnetic valve 40 is adapted to control a gas flow to the main burner, and the second outlet channel C3 is adapted to supply gas to the main burner.

The inlet channel C1 communicates the first gas pipe 24 and the inlet chamber R, wherein the first isolating membrane 35 is disposed in the inlet chamber R to divide the inlet chamber R into a first part R1 and a second part R2 that communicates with the first part R1. An end of the first elastic member 36 abuts against an inner wall of the second part R2 of the inlet chamber R, another end of the first elastic member 36 abuts against the first isolating membrane 35. The first electromagnetic valve 37 is adapted to regulate a communication between the second part R2 of the inlet chamber R and the first outlet channel C2, namely communicating and blocking. A side of the first isolating membrane 35 is urged against by the first elastic member 36 to block a communication between the first part R1 of the inlet chamber R and the first outlet channel C2.

The second isolating membrane 38 is disposed in the main gas chamber M to divide the main gas chamber M into a first part M1 and a second part M2 that communicates with the first part M1. An end of the second elastic member 39 abuts against an inner wall of the second part M2, the other end of the second elastic member 39 abuts against the second isolating membrane 38. The second electromagnetic valve 40 is adapted to regulate a communication between the first part M1 of the main gas chamber M and the second outlet channel C3, namely communicating and blocking. A side of the second isolating membrane 38 is urged against by the second elastic member 39 to block a communication between the second part M2 of the main gas chamber M and the second outlet channel C3.

With such design, gas in the inlet channel C1 could flow through the check valve body 30 to enter the first part R1 of the inlet chamber R. After that the gas could enter to the second part R2 from the first part R1 of the inlet chamber R via a tube C4, wherein the tube C4 communicates the first part R1 and the second part R2 of the inlet chamber R. The first electromagnetic valve 37 is a normally closed solenoid valve. When the first electromagnetic valve 37 is operated to turn on, the second part R2 of the inlet chamber R communicates with the first outlet channel C2. The second part R2 of the inlet chamber R communicates with the second part M2 of the main gas chamber M. Gas could enter the first part M1 from the second part M2 of the main gas chamber M via another tube C5, wherein the another tube C5 communicates the first part M1 and the second part M2 of the main gas chamber M. At this time, the gas could be outputted through the first outlet channel C2 to the pilot burner, and a pilot flame is ignited by the ignitor 121. Additionally, when the first electromagnetic valve 37 is turned on, a pressure in the second part R2 of the inlet chamber R is smaller than a pressure in the first part R1 of the inlet chamber R. The pressure difference in the inlet chamber R could move the first isolating membrane 35 downward to compress the first elastic member 36 and to allow the first part R1 of the inlet chamber R communicates with the first outlet channel C2.

The second electromagnetic valve 40 is a normally closed solenoid valve. When the second electromagnetic valve 40 is operated to turn on, the first part M1 of the main gas chamber M communicates with the second outlet channel C3. At this time, gas is outputted through the second outlet channel C3 to the main burner for combustion to generate a main flame. Additionally, when the second electromagnetic valve 40 is operated to turn on, a pressure of the first part M1 of the main gas chamber M is smaller than a pressure of the second part M2 of the main gas chamber M. The pressure difference in the main gas chamber M could move the second isolating membrane 38 upward to compress the second elastic member 39 and to allow the second part M2 of the main gas chamber M communicates with the second outlet channel C3.

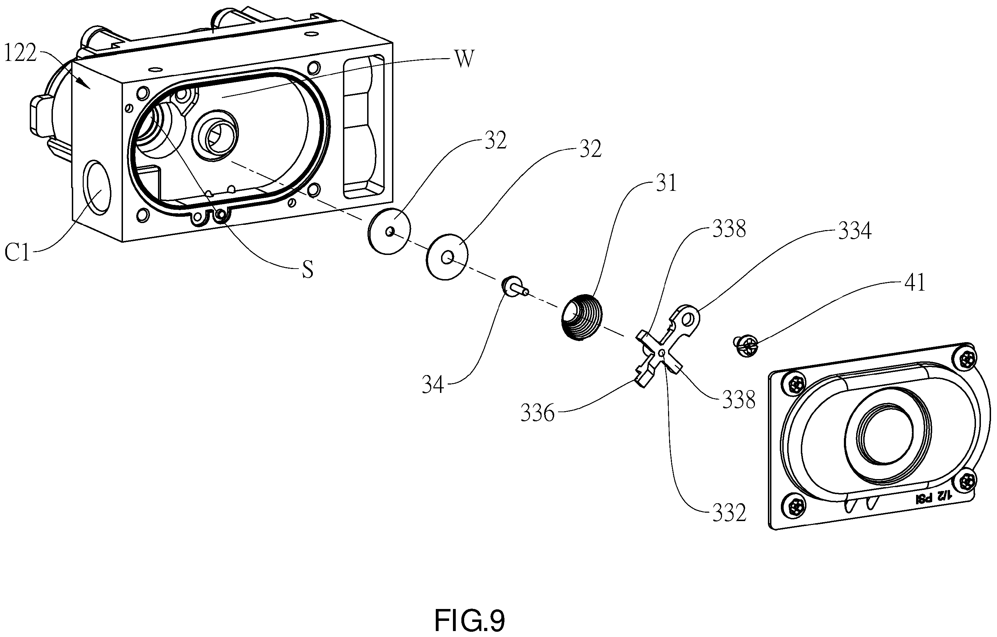

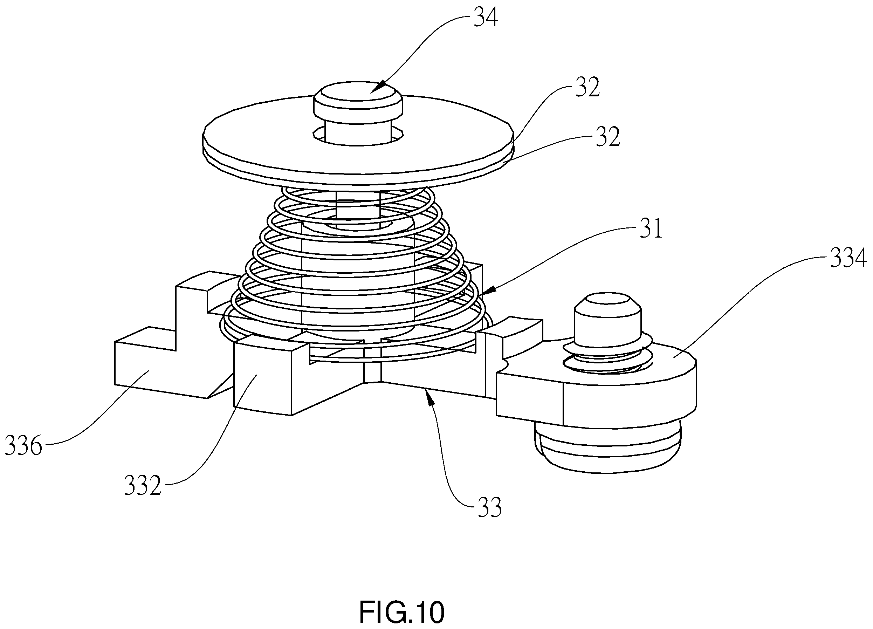

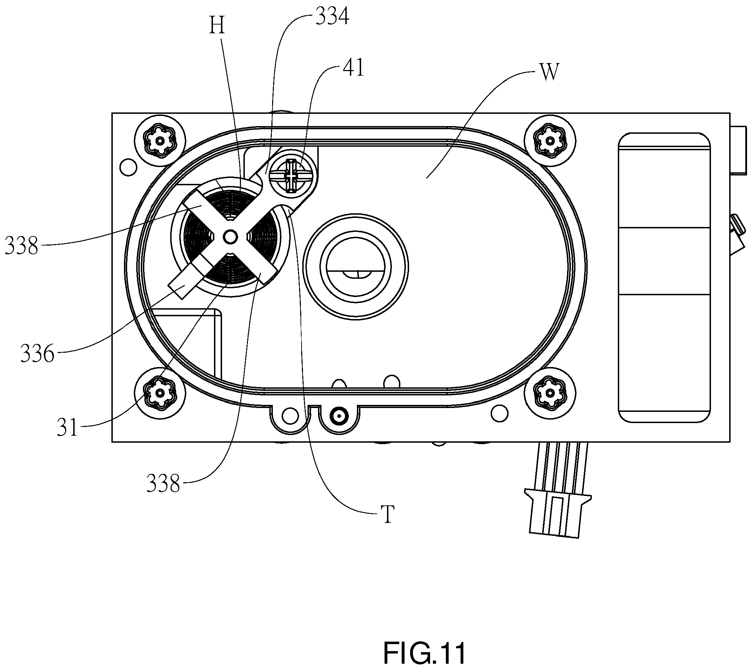

As illustrated in FIG. 9 to FIG. 11, the inlet channel C1 has a mounting hole H, wherein the shoulder S is located in the mounting hole H. The seat 33 has a first foot 334, a second foot 336, and two third feet 338, wherein the second foot 336 extends in an opposite direction of the first foot 334, and the two third feet 338 extend to oppsite directions. Each of the first foot 334 and the second foot 336 is perpendicular to one of the two third feet 338. Each of the first foot 334, the second foot 336, and the third feet 338 has a positioning portion, wherein the positioning portion is a portion of the seat 33 that is arranged around the elastic member 31 for preventing the elastic member 31 from moving, as illustrated in FIG. 10. When the check valve body 30 is disposed in the mounting hole H, the seat 33 is inserted into the mounting hole H. Besides, a side of the first foot 334, a side of the second foot 336, and sides of the third feet 338 that face a direction away from the elastic member 31 could abut against the inner wall of the mounting hole H, so that the check valve body 30 could be firmly mounted in the mounting hole H. Additionally, as illustrated in FIG. 11, an free end of the first foot 334 and a free end of the second foot 336 respectively abut against an internal wall W of the first part R1 of the inlet chamber R. The internal wall W has an engaging recess T that is formed by recessing into a surface of the internal wall W. A contour of the engaging recess T is correspondingly complementary to the free end of the first foot 334. Thus, by simply engaging the free end of the first foot 334 with the engaging recess T, the seat 33 of the check valve body 30 could be quickly positioned and assembled. After that, fasteners such as screws 41 could be used to fix the seat 31 to the gas valve 122.

In the current embodiment, the gas valve 122 includes the inlet chamber R, the first isolating membrane 35, the first elastic member 36, the first electromagnetic valve 37, the first outlet channel C2, the main gas chamber M, the second isolating membrane 38, the second elastic member 39, the second electromagnetic valve 40, and the second outlet channel C3. However, in other embodiments, the main gas chamber M, the second isolating membrane 38, the second elastic member 39, the second electromagnetic valve 40, and the second outlet channel C3 of the gas valve 122 could be omitted. For example, in another embodiment, the gas valve could merely includes an inlet chamber, an isolating membrane, a spring, a solenoid valve, an outlet channel, wherein the inlet channel communicates the first gas pipe and the inlet chamber. The isolating membrane is disposed in the inlet chamber to divide the inlet chamber into a first part and a second part. An end of the spring urges against the internal wall of the second part of the inlet chamber, and the other end of the spring abuts against the isolating membrane. The solenoid valve is adapted to regulate the communication between the second part of the inlet chamber and the outlet channel, namely communicating and blocking. A side of the isolating membrane is urged by the spring to block the communication between the first part of the inlet chamber and the outlet channel, so that gas in the inlet channel could pass through the check valve body 30 to enter the first part of the inlet chamber, and then the gas could enter the second part from the first part through a tube. The tube communicates the first part and the second part of the inlet chamber. The solenoid valve is a normally closed solenoid valve. When the solenoid valve is regulated to be turned on, the second part could communicate with the outlet channel. Therefore, gas could be outputted through the outlet channel to the burner and be ignited by the ignitor. When the solenoid valve is turned on, the pressure at the second part is smaller than the pressure in the first part of the inlet chamber, so that the isolating membrane could be moved toward the second part to compress the spring due to the difference of the pressure, thereby communicating the first part with the outlet channel.

To sum up, when the second water heater 14 that is located near to the distal end of the main pipe 22 is activated and the first water heater 12 that is located near to the gas source G is not activated, the check valve body 30 could prevent the gas in the gas valve 122 from flowing into the first gas pipe 24. Even though the gas flow rate of the gas flowing to the second water heater 14 is high in the gas tubes, the air in the first water heater 12 could not mix with the gas flowing to the second water heater 14, thereby solving the problem such as the long ignition time or the low combustion efficiency of the second water heater 14.

Additionally, the gas appliances of the gas burner system of the present invention include, but are not limited to, a water heater, a gas fireplace, a gas stove, a gas oven, and a gas dry, as long as the gas appliances are connected to the same main pipe (namely the same gas source G).

## Claims

1. A gas valve (122) for a gas appliance and communicating with a gas source (G) via a gas pipe, wherein the gas valve (122) comprising:
an inlet channel (C1) communicating with the gas pipe;
a check valve body (30) disposed in the inlet channel (C1) of the gas valve (122) and comprising an elastic member (31) and a sealing member (32), wherein the elastic member (31) provides a supporting force to the sealing member (32) to block the inlet channel (C1);
wherein when gas flows toward the gas valve (122), the gas flow provides a force against the supporting force to move the sealing member (32), thereby allowing the gas to flow through the check valve body (30);
wherein the inlet channel (C1) has a shoulder (S); a side of the sealing member (32) abuts against the shoulder (S), and another side of the sealing member (32) is urged by the elastic member (31) to block the inlet channel (C1); when a force exerted to the elastic member (31) overcomes the supporting force, the sealing member (32) is disengaged from the shoulder (S) to allow gas in the gas pipe to flow through the check valve body (30);
wherein the check valve body (30) comprises a seat (33) disposed in the inlet channel (C1), an end of the elastic member (31) urges against the sealing member (32), and another end of the elastic member (31) urges against the seat (33);
wherein the gas valve (122) comprises an inlet chamber (R), an isolating membrane (35), a spring (36), a solenoid valve (37), and an outlet channel (C2); the inlet channel (C1) communicates the gas pipe and the inlet chamber (R), the isolating membrane (35) is disposed in the inlet chamber (R) to divide the inlet chamber (R) into a first part (R1) and a second part (R2) that communicates with the first part (R1) of the inlet chamber (R); an end of the spring (36) urges against an internal wall of the second part (R2) of the inlet chamber (R), and another end of the spring (36) urges against the isolating membrane (35); the solenoid valve (37) is adapted to regulate a communication between the second part (R2) of the inlet chamber (R) and the outlet channel (C2); a side of the isolating membrane (35) is urged by the spring (36) to block a communication between the first part (R1) of the inlet chamber (R) and the outlet channel (C2);
**characterized in that**:
the inlet channel (C1) has a mounting hole (H), wherein the shoulder (S) is located in the mounting hole (H); the seat (33) has a first foot (334) and a second foot (336), wherein the second foot (336) extends in an opposite direction of the first foot (334); a free end of the first foot (334) and a free end of the second foot (336) respectively abut against an internal wall (W) of the first part (R1) of the inlet chamber (R); the internal wall (W) of the first part (R1) has an engaging recess (T) that is formed by recessing into a surface of the internal wall (W) of the first part (R1); a contour of the engaging recess (T) is correspondingly complementary to the free end of the first foot (334), and the free end of the first foot (334) engages with the engaging recess (T).

2. The gas valve (122) as claimed in claim 1, wherein the elastic member (31) is a conical compression spring (39), and a diameter of the elastic member (31) is gradually increased from the end of the elastic member (31) that urges against the sealing member (32) to the end of the elastic member (31) that urges against the seat (33).

3. The gas valve (122) as claimed in claim 1, wherein the seat (33) has a perforation (332) and the check valve body (30) comprises a guided rod (34); an end of the guided rod (34) is movably disposed in the perforation (332), and another end of the guided rod (34) is connected to the sealing member (32); the elastic member (31) is disposed around the guided rod (34).

4. The gas valve (122) as claimed in claim 3, wherein the sealing member (32) has a hole (321), the end of the guided rod (34) connected to the sealing member (32) has a head (341) and a restricting portion (342); the guided rod (34) passes through the hole (321), and the sealing member (32) is located between the head (341) and the restricting portion (342); a diameter of the head (341) and a diameter of the restricting portion (342) are greater than a diameter of the hole (321) of the sealing member (32), and the diameter of the restricting portion (342) is greater than a diameter of the perforation (332) of the seat (33).

5. The gas valve (122) as claimed in claim 4, wherein the seat (33) has a protruding column (331), and the protruding column (331) has the perforation (332); the elastic member (31) fits around the protruding column (331).

6. A gas burner system, comprising:
a plurality of gas appliances, wherein each of the gas appliances comprises a burner (120) for burning gas, the plurality of gas appliances comprises a first gas appliance and a second gas appliance;
a plurality of gas pipes comprising a main pipe (22), a first gas pipe (24), and a second gas pipe (26), wherein the main pipe (22) is connected to the gas source (G); an end of the first gas pipe (24) is connected to the main pipe (22), and another end of the first gas pipe (24) is connected to the first gas appliance; an end of the second gas pipe (26) is connected to the main pipe (22), and another end of the second gas pipe (26) is connected to the second gas appliance; the first gas pipe (24) is connected to the main pipe (22) at a site that is closer to the gas source (G) than a connection site between the second gas pipe (26) and the main pipe (22);
wherein
the first gas appliance comprises the gas valve (122) as claimed in claim 1; the gas valve (122) communicates with the burner (120) of the first gas appliance; the first gas pipe (24) constitutes the gas pipe that communicates between the gas valve (122) and the gas source (G); the end of the first gas pipe (24) is connected to the main pipe (22), the another end of the first gas pipe (24) is connected to the inlet channel (C1) of the first gas appliance.

## Patentansprüche

1. Gasventil (122) für ein Gasgerät, das über eine Gasleitung mit einer Gasquelle (G) kommuniziert, wobei das Gasventil (122) aufweist:
einen Einlasskanal (C1), der mit der Gasleitung kommuniziert;
einen Rückschlagventilkörper (30), der in dem Einlasskanal (C1) des Gasventils (122) angeordnet ist und ein elastisches Element (31) und ein Dichtungselement (32) aufweist, wobei das elastische Element (31) eine Stützkraft auf das Dichtungselement (32) ausübt, um den Einlasskanal (C1) zu blockieren;
wobei, wenn Gas in Richtung des Gasventils (122) strömt, der Gasstrom eine Kraft gegen die Stützkraft ausübt, um das Dichtungselement (32) zu bewegen, wodurch dem Gas ermöglicht wird, durch den Rückschlagventilkörper (30) zu strömen;
wobei der Einlasskanal (C1) eine Schulter (S) hat; wobei eine Seite des Dichtungselements (32) an der Schulter (S) anliegt und eine andere Seite des Dichtungselements (32) durch das elastische Element (31) gedrückt wird, um den Einlasskanal (C1) zu blockieren; wobei, wenn eine auf das elastische Element (31) ausgeübte Kraft die Stützkraft überwindet, das Dichtungselement (32) von der Schulter (S) gelöst wird, um Gas in der Gasleitung zu ermöglichen, durch den Rückschlagventilkörper (30) zu strömen;
wobei der Rückschlagventilkörper (30) einen im Einlasskanal (C1) angeordneten Sitz (33) aufweist, ein Ende des elastischen Elements (31) gegen das Dichtungselement (32) drückt und ein anderes Ende des elastischen Elements (31) gegen den Sitz (33) drückt;
wobei das Gasventil (122) eine Einlasskammer (R), eine Isoliermembran (35), eine Feder (36), ein Magnetventil (37) und einen Auslasskanal (C2) aufweist; wobei der Einlasskanal (C1) die Gasleitung und die Einlasskammer (R) kommuniziert, die Isoliermembran (35) in der Einlasskammer (R) angeordnet ist, um die Einlasskammer (R) in einen ersten Teil (R1) und einen zweiten Teil (R2) zu unterteilen, der mit dem ersten Teil (R1) der Einlasskammer (R) kommuniziert; wobei ein Ende der Feder (69) gegen eine Innenwand des zweiten Teils (R2) der Einlasskammer (R) drückt, und ein anderes Ende der Feder (36) gegen die Isoliermembran (35) drückt; wobei das Magnetventil (37) angepasst ist, um eine Kommunikation zwischen dem zweiten Teil (R2) der Einlasskammer (R) und dem Auslasskanal (C2) zu regulieren; wobei eine Seite der Isoliermembran (35) von der Feder (39) gedrückt wird, um eine Kommunikation zwischen dem ersten Teil (R1) der Einlasskammer (R) und dem Auslasskanal (C2) zu blockieren;
**dadurch gekennzeichnet, dass**:
der Einlasskanal (C1) ein Montageloch (H) hat, wobei sich die Schulter (S) im Montageloch (H) befindet; wobei der Sitz (33) einen ersten Fuß (334) und einen zweiten Fuß (336) hat, wobei sich der zweite Fuß (336) in einer dem ersten Fuß (334) entgegengesetzten Richtung erstreckt; wobei ein freies Ende des ersten Fußes (334) und ein freies Ende des zweiten Fußes (336) jeweils an einer Innenwand (W) des ersten Teils (R1) der Einlasskammer (R) anstoßen; wobei die Innenwand (W) des ersten Teils (R1) eine Eingriffsaussparung (T) hat, die durch Aussparen in eine Fläche der Innenwand (W) des ersten Teils (R1) gebildet ist; wobei eine Kontur der Eingriffsaussparung (T) entsprechend komplementär zum freien Ende des ersten Fußes (334) ist, und das freie Ende des ersten Fußes (334) in die Eingriffsaussparung (T) eingreift.

2. Gasventil (122) gemäß Anspruch 1, wobei das elastische Element (31) eine konische Kompressionsfeder (39) ist und ein Durchmesser des elastischen Elements (31) vom Ende des elastischen Elements (31), das gegen das Dichtungselement (32) drückt, zum Ende des elastischen Elements (31), das gegen den Sitz (33) drückt, allmählich zunimmt.

3. Gasventil (122) gemäß Anspruch 1, wobei der Sitz (33) eine Perforation (332) hat und der Rückschlagventilkörper (30) eine Führungsstange (34) aufweist; wobei ein Ende der Führungsstange (34) bewegbar in der Perforation (332) angeordnet ist und ein anderes Ende der Führungsstange (34) mit dem Dichtungselement (32) verbunden ist; wobei das elastische Element (31) um die Führungsstange (34) herum angeordnet ist.

4. Gasventil (122) gemäß Anspruch 3, wobei das Dichtungselement (32) ein Loch (321) hat, das Ende der mit dem Dichtungselement (32) verbundenen Führungsstange (34) einen Kopf (341) und einen Begrenzungsabschnitt (342) hat; wobei die Führungsstange (34) durch das Loch (321) verläuft und sich das Dichtungselement (32) zwischen dem Kopf (341) und dem Begrenzungsabschnitt (342) befindet; wobei ein Durchmesser des Kopfs (341) und ein Durchmesser des Begrenzungsabschnitts (342) größer sind als ein Durchmesser des Lochs (321) des Dichtungselements (32), und der Durchmesser des Begrenzungsabschnitts (342) größer ist als ein Durchmesser der Perforation (332) des Sitzes (33).

5. Gasventil (122) gemäß Anspruch 4, wobei der Sitz (33) eine vorstehende Säule (331) hat und die vorstehende Säule (331) die Perforation (332) hat; wobei das elastische Element (31) um die vorstehende Säule (331) herum passt.

6. Gasbrennersystem, das aufweist:
mehrere Gasgeräte, wobei jedes der Gasgeräte einen Brenner (120) zum Verbrennen von Gas aufweist, wobei die mehreren Gasgeräte ein erstes Gasgerät und ein zweites Gasgerät aufweist;
mehrere Gasleitungen, die eine Hauptleitung (22), eine erste Gasleitung (24) und eine zweite Gasleitung (26) aufweisen, wobei die Hauptleitung (22) mit der Gasquelle (G) verbunden ist; wobei ein Ende der ersten Gasleitung (24) mit der Hauptleitung (22) verbunden ist und ein anderes Ende der ersten Gasleitung (24) mit dem ersten Gasgerät verbunden ist; wobei ein Ende der zweiten Gasleitung (26) mit der Hauptleitung (22) verbunden ist und ein anderes Ende der zweiten Gasleitung (26) mit dem zweiten Gasgerät verbunden ist; wobei die erste Gasleitung (24) an einer Stelle mit der Hauptleitung (22) verbunden ist, die näher an der Gasquelle (G) liegt als eine Verbindungsstelle zwischen der zweiten Gasleitung (26) und der Hauptleitung (22);
wobei das erste Gasgerät das Gasventil (122) gemäß Anspruch 1 aufweist; wobei das Gasventil (122) mit dem Brenner (120) des ersten Gasgeräts kommuniziert; wobei die erste Gasleitung (24) die Gasleitung bildet, die zwischen dem Gasventil (122) und der Gasquelle (G) kommuniziert; wobei das Ende der ersten Gasleitung (24) mit der Hauptleitung (22) verbunden ist, das andere Ende der ersten Gasleitung (24) mit dem Einlasskanal (C1) des ersten Gasgeräts verbunden ist.

## Revendications

1. Vanne à gaz (122) pour un appareil à gaz et communiquant avec une source de gaz (G) via un tuyau à gaz, dans laquelle la vanne à gaz (122) comprend :
un canal d'entrée (C1) communiquant avec le tuyau à gaz ;
un corps de clapet anti-retour (30) disposé dans le canal d'entrée (C1) de la vanne à gaz (122) et comprenant un élément élastique (31) et un élément d'étanchéité (32), dans laquelle l'élément élastique (31) fournit une force de support à l'élément d'étanchéité (32) pour bloquer le canal d'entrée (C1) ;
dans laquelle, lorsque le gaz s'écoule vers la vanne à gaz (122), l'écoulement de gaz fournit une force contre la force de support pour déplacer l'élément d'étanchéité (32), permettant ainsi au gaz de s'écouler à travers le corps de clapet anti-retour (30) ;
dans laquelle le canal d'entrée (C1) comporte un épaulement (S) ; un côté de l'élément d'étanchéité (32) vient en butée contre l'épaulement (S), et un autre côté de l'élément d'étanchéité (32) est poussé par l'élément élastique (31) pour bloquer le canal d'entrée (C1) ; lorsqu'une force exercée sur l'élément élastique (31) surmonte la force de support, l'élément d'étanchéité (32) se met hors prise de l'épaulement (S) pour permettre au gaz dans le tuyau à gaz de s'écouler à travers le corps de clapet anti-retour (30) ;
dans laquelle le corps de clapet anti-retour (30) comprend un siège (33) disposé dans le canal d'entrée (C1), une extrémité de l'élément élastique (31) appuie contre l'élément d'étanchéité (32), et une autre extrémité de l'élément élastique (31) appuie contre le siège (33) ;
dans laquelle la vanne à gaz (122) comprend une chambre d'entrée (R), une membrane d'isolation (35), un ressort (36), une électrovanne (37) et un canal de sortie (C2) ; le canal d'entrée (C1) relie le tuyau à gaz et la chambre d'entrée (R), la membrane isolante (35) est disposée dans la chambre d'entrée (R) afin de diviser la chambre d'entrée (R) en une première partie (R1) et une deuxième partie (R2) qui communique avec la première partie (R1) de la chambre d'entrée (R) ; une extrémité du ressort (36) appuie contre une paroi interne de la deuxième partie (R2) de la chambre d'entrée (R), et une autre extrémité du ressort (36) appuie contre la membrane isolante (35) ; l'électrovanne (37) est adaptée pour réguler une communication entre la deuxième partie (R2) de la chambre d'entrée (R) et le canal de sortie (C2) ; un côté de la membrane isolante (35) est poussé par le ressort (36) pour bloquer une communication entre la première partie (R1) de la chambre d'entrée (R) et le canal de sortie (C2) ;
**caractérisée en ce que** :
le canal d'entrée (C1) comporte un trou de montage (H), l'épaulement (S) étant situé dans le trou de montage (H) ; le siège (33) comporte un premier pied (334) et un deuxième pied (336), le deuxième pied (336) s'étendant dans une direction opposée au premier pied (334) ; une extrémité libre du premier pied (334) et une extrémité libre du deuxième pied (336) butent respectivement contre une paroi interne (W) de la première partie (R1) de la chambre d'entrée (R) ; la paroi interne (W) de la première partie (R1) comporte un évidement de mise en prise (T) qui est formé par un évidement dans une surface de la paroi interne (W) de la première partie (R1) ; un contour de l'évidement de mise en prise (T) est complémentaire de l'extrémité libre du premier pied (334) de manière correspondante, et l'extrémité libre du premier pied (334) est mise en prise dans l'évidement de mise en prise (T).

2. Vanne à gaz (122) selon la revendication 1, dans laquelle l'élément élastique (31) est un ressort de compression conique (39), et un diamètre de l'élément élastique (31) augmente progressivement depuis l'extrémité de l'élément élastique (31) qui appuie contre l'élément d'étanchéité (32) jusqu'à l'extrémité de l'élément élastique (31) qui appuie contre le siège (33).

3. Vanne à gaz (122) selon la revendication 1, dans laquelle le siège (33) comporte une perforation (332) et le corps de clapet anti-retour (30) comprend une tige guidée (34) ; une extrémité de la tige guidée (34) est disposée de manière mobile dans la perforation (332), et une autre extrémité de la tige guidée (34) est reliée à l'élément d'étanchéité (32) ; l'élément élastique (31) est disposé autour de la tige guidée (34).

4. Vanne à gaz (122) selon la revendication 3, dans laquelle l'élément d'étanchéité (32) comporte un trou (321), l'extrémité de la tige guidée (34) reliée à l'élément d'étanchéité (32) comporte une tête (341) et une partie restrictive (342) ; la tige guidée (34) passe à travers le trou (321), et l'élément d'étanchéité (32) est situé entre la tête (341) et la partie restrictive (342) ; un diamètre de la tête (341) et un diamètre de la partie restrictive (342) sont supérieurs à un diamètre du trou (321) de l'élément d'étanchéité (32), et le diamètre de la partie restrictive (342) est supérieur à un diamètre de la perforation (332) du siège (33).

5. Vanne à gaz (122) selon la revendication 4, dans laquelle le siège (33) comporte une colonne en saillie (331), et la colonne en saillie (331) comporte la perforation (332) ; l'élément élastique (31) s'adapte autour de la colonne en saillie (331).

6. Système de brûleur à gaz, comprenant :
une pluralité de appareils à gaz, chacun des appareils à gaz comprenant un brûleur (120) pour brûler du gaz, la pluralité de appareils à gaz comprenant un premier appareil à gaz et un deuxième appareil à gaz ;
une pluralité de tuyaux à gaz comprenant un tuyau principal (22), un premier tuyau à gaz (24) et un deuxième tuyau à gaz (26), dans lequel le tuyau principal (22) est connecté à la source de gaz (G) ; une extrémité du premier tuyau à gaz (24) est connectée au tuyau principal (22), et une autre extrémité du premier tuyau à gaz (24) est connectée au premier appareil à gaz ; une extrémité du deuxième tuyau à gaz (26) est connectée au tuyau principal (22), et une autre extrémité du deuxième tuyau à gaz (26) est connectée au deuxième appareil à gaz ; le premier tuyau à gaz (24) est connecté au tuyau principal (22) à un endroit plus proche de la source de gaz (G) qu'un endroit de connexion entre le deuxième tuyau à gaz (26) et le tuyau principal (22) ;
dans lequel le premier appareil à gaz comprend la vanne à gaz (122) selon la revendication 1 ; la vanne à gaz (122) communique avec le brûleur (120) du premier appareil à gaz ; le premier tuyau à gaz (24) constitue le tuyau à gaz qui communique entre la vanne à gaz (122) et la source de gaz (G) ; l'extrémité du premier tuyau à gaz (24) est connectée au tuyau principal (22), l'autre extrémité du premier tuyau à gaz (24) est connectée au canal d'entrée (C1) du premier appareil à gaz.
